# EUROPÄISCHE PATENTSCHRIFT

(11) **EP 0 615 595 B1**
(45) Veröffentlichungstag und Bekanntmachung des Hinweises auf die Patenterteilung: **11.09.1996**
(21) Anmeldenummer: 93920830.2
(22) Anmeldetag: 27.09.1993
(51) Int. Cl.: F16L 27/10, F01N 7/18

(54) **FLEXIBLE VERBINDUNGSANORDNUNG FÜR ZWEI ROHRTEILE, INSBESONDERE BEI ABGASANLAGEN VON KRAFTFAHRZEUGEN**
FLEXIBLE CONNECTION FOR TWO PIPE SECTIONS, ESPECIALLY IN MOTOR VEHICLE EXHAUST SYSTEMS
DISPOSITIF DE RACCORDEMENT FLEXIBLE POUR DEUX ELEMENTS TUBULAIRES, NOTAMMENT POUR SYSTEMES DE GAZ D'ECHAPPEMENT DE VEHICULES

(30) Priorität: 06.10.1992 DE 4233644
(43) Veröffentlichungstag der Anmeldung: 21.09.1994
(73) Patentinhaber: Feodor Burgmann Dichtungswerke GmbH & Co.K.G., D-82515 Wolfratshausen (DE)
(72) Erfinder: HARTLING, Peter, D-82538 Geretsried (DE); DEINHARD, Hans, D-81541 München (DE)
(74) Vertreter: Geyer, Werner
(86) Internationale Anmeldenummer: EP9302622
(87) Internationale Veröffentlichungsnummer: WO9408169

(56) Entgegenhaltungen:
- EP-A- 0 282 689
- EP-A- 0 327 148
- EP-A- 0 432 436
- FR-A- 2 634 535
- US-A- 5 145 215

## Beschreibung

Die Erfindung bezieht sich auf eine flexible Verbindungsanordnung für zwei Rohrteile, insbesondere bei Abgasanlagen von Kraftfahrzeugen, mit einem metallischen, axial beidseitig mit Anschlußstücken in Form von im wesentlichen zylindrischen Hülsen oder Stutzen gasdicht verbundenen Faltenbalg, wobei die Anschlußstücke an ihren dem Faltenbalg zugewandten Seiten radial erweiterte Endabschnitte mit im wesentlichen zylindrischen Endbereichen aufweisen, femer mit einer koaxial zum Faltenbalg liegenden, sich über dessen Länge erstreckenden und mit ihm in Wirkverbindung stehenden Dämpfungseinlage und mit einem radial nach innen wirksamen Hitzeschutz für den Faltenbalg.

Solche flexiblen Verbindungsanordnungen finden in Abgasleitungen, insbesondere von Kraftfahrzeugen, in Form von Zwischenstücken Einsatz und dienen dazu, die an sie angeschlossenen Rohrteile fedemd, gelenkig und gedämpft miteinander zu verbinden und sie schwingungstechnisch gegenseitig zu entkoppeln, d.h. auftretende Relativbewegungen, Schwingungen und Vibrationen von den benachbarten Bauteilen abzukoppeln. Die Abgasleitungen sind im übrigen als starre Systeme ausgebildet, so daß die Frage der elastischen Entkopplung besonders wichtig ist.

Gerade in jüngerer Zeit treten bei solchen Verbindungsanordnungen aber auch zunehmend die Fragen nach einer guten Schalldämmung, einer wirksamen Wärmeisolation und insbesondere auch einer effizienten Abdichtung gegen das unerwünschte Austreten von Abgasen aus der Abgasleitung in den Vordergrund, insbesondere wenn die betreffenden Verbindungsanordnungen in Strömungsrichtung der Abgase gesehen vor Katalysatoren eingebaut werden.

Es ist eine Vielzahl solcher flexibler Verbindungsanordnungen von Rohrteilen bekannt, darunter auch solche, bei denen die Abdichtung gegen ein unerwünschtes Austreten von Abgasen nach außen mittels eines metallischen, an seinen beiden Enden jeweils mit einem der beiden Rohrteile dicht verbundenen Faltenbalges erfolgt.

Aus der EP-A-0 432 436 ist eine flexible Verbindungsanordnung bekannt, bei der ein flexibler Faltenbalg eingesetzt wird, der unmittelbar von einem Geflechtsschlauch aus Metalldraht umgeben ist, wobei Faltenbalg und Geflechtsschlauch endständig innerhalb eines zylindrischen Stützringes miteinander und mit diesem verpreßt und die Teile gegenseitig durch Anheften verbunden sind. Zur guten Aufnahme der bei Betrieb auftretenden Schwingungen und Vibrationen ist zudem mindestens ein von einem Abschlußende der Verbindungsanordnung ausgehendes, relativ zum Geflechtsschlauch bewegliches, flexibles Dämpfungsglied vorgesehen, das die gewünschte Dämpfungswirkung durch reibende Anlage am den Faltenbalg umgebenden Geflechtsschlauch bewirkt Dieses flexible Dämpfungsglied kann z.B. in Form einer auf dem Geflechtsschlauch reibend-verschieblichen Feder (in Form z.B. einer Schraubenfeder) ausgebildet sein, die mit ihrem einen Ende an dem einen Anschlußende der Verbindungsanordnung befestigt, mit ihrem anderen Ende jedoch auf dem Geflechtsschlauch frei verschieblich angebracht ist. Diese bekannte Verbindungsanordnung ist etwas kompliziert im Aufbau, da der Geflechtsschlauch an seinen beiden axialen Enden zusammen mit den jeweiligen Enden des Faltenbalges und dem Stützring dicht und fest verpreßt werden muß. Zudem muß dabei der Geflechtsschlauch alle axialen Kräfte voll aufnehmen, was zur Gefahr eines Aufreißens dessen endseitiger Verbindungsstellen oder gar des Geflechtsschlauches selbst führt. Daneben sind solche Metall-Geflechtsschläuche nur sehr begrenzt drehbar und fransen leicht aus. Auch die Montage dieser bekannten Verbindungsanordnung ist schwierig, was besonders auch im Hinblick auf die reibende Anlage der Dämpfungsfeder auf dem Geflechtsschlauch gilt.

Eine flexible Verbindungsanordnung der eingangs genannten Art wird in der EP 0 282 689 A2 beschrieben. Bei diesem bekannten flexiblen Verbindungselement sind der Faltenbalg und die Dämpfungseinlage koaxial zueinander angeordnet, wobei die radial nach innen gerichteten Endbereiche der Falten des Balges über eine gewisse Eindringtiefe hinweg in die Dämpfungseinlage eingebettet sind. Die hierdurch erreichte Wirkverbindung zwischen der Dämpfungseinlage und den Windungen des Faltenbalges führt zu einer sehr effizienten Schwingungsdämpfung für den Balg und einer gleichmäßigen Verteilung der Schwingungen über die gesamte Balglänge. Zudem wirkt die Dämpfungseinlage gleichzeitig als Isolierlage und als nach innen wirksamer Hitzeschutz für den Faltenbalg. Dabei wird die Dämpfungseinlage an ihrer radialen Innenfläche über einen koaxial zu ihr angeordneten Metallschlauch in Form eines Agraffschlauches ausgebildet, der an seinen beiden Enden jeweils innerhalb des Innenumfangs eines der beiden miteinander zu verbindenden Rohrteile angeschweißt ist Der Faltenbalg ist an seiner äußeren Seite von einem Schlauch aus einem Metallgeflecht zum Schutz gegen äußere mechanische Beeinträchtigung und Verschmutzung umgeben. Die Enden des Metallbalges sind im Bereich des Balgaußendurchmessers an den sich radial erweiternden Endabschnitten der Abschlußstücke verschweißt, wobei gleichzeitig der den Balg umgebende Schlauch mitverschweißt ist. Die bekannte flexible Verbindungsanordnung führt bei guter Schallisolierung und Wärmedämmung zu einer vollständigen Abdichtung der Verbindungsstelle. Allerdings ist der Aufbau des bekannten Verbindungselementes sehr kompliziert und erfordert dabei das Anbringen von vier umlaufenden Schweißnähten, von denen zwei zu einer gleichzeitigen Befestigung von Schlauch, Faltenbalg und Anschlußstück dienen. Gerade solche Schweißnähte könnten leicht zu Verwerfungen und Schweißspannungen führen, die den Faltenbalg und den ihn umgebenden Metallschlauch gemeinsam beeinflussen und z.B. Zwangsspannungen aufbauen, die gerade auch bei einem empfindlichen metallischen Faltenbalg zu Funktionsstörungen führen können. Infolge des komplizierten Aufbaus dieser bekannten flexiblen Verbindungsanordnung ist auch deren Montage relativ kompliziert und schwierig. Axiale Kräfte müssen wieder voll von dem inneren Metallschlauch bzw. von dem äußeren, den Faltenbalg umgebenden Metallschlauch aufgenommen werden, was bei Auftreten großer axialer Relativbewegungen zwischen den zu verbindenden Metallteilen zu einem Aufplatzen der Schweißnähte bzw. einem Aufreißen des betreffenden Metallschlauches führen kann. Auch hier gilt, daß diese Metallschläuche nur sehr begrenzt dehnbar sind und leicht ausfransen.

Ausgehend hiervon liegt der Erfindung die Aufgabe zugrunde, eine flexible Verbindungsanordnung der eingangs genannten Art so weiterzuentwickeln, daß sie unter Beibehaltung ihrer völligen Gasdichtheit einfacher aufgebaut, leichter montierbar und gleichzeitig besser zur Aufnahme axialer Relativbewegungen der zu verbindenden Rohrteile zueinander geeignet ist.

Erfindungsgemäß wird diese Aufgabe bei einer gattungsgemäßen Verbindungsanordnung dadurch gelöst, daß die Dämpfungseinlage den Faltenbalg radial außen umschließt, wobei dessen Windungen gegen die Dämpfungseinlage anliegen, daß ferner die axialen Endbereiche der Dämpfungseinlage in den erweiterten Endabschnitten der Anschlußstücke aufgenommen sind, ohne an diesen befestigt zu sein, und von deren zylindrischen Endbereichen radial nach außen abgestützt werden, daß weiterhin die Anschlußstücke über eine die Dämpfungseinlage radial außen umgebende Feder miteinander verbunden sind, und daß der Hitzeschutz von einem koaxial zum Faltenbalg radial mit Abstand zu diesem innerhalb desselben verlaufenden Rohrabschnitt gebildet ist, der an dem in Strömungsrichtung vorne liegenden Anschlußstück befestigt ist.

Durch die erfindungsgemäße Verbindung wird eine flexible Verbindungsanordnung geschaffen, die einen deutlich einfacheren Aufbau als die gattungsgemäße Anordnung aufweist und bei der keine Notwendigkeit zur Verwendung von vier umlaufenden Schweißnähten besteht. Allein die Befestigung der Enden des Faltenbalges an den zugehörigen Anschlußstücken kann zweckmäßigerweise durch Schweißen vorgenommen werden, wobei gleichzeitig auch noch an dem strömungsseitig vorne liegenden Anschlußstück mit derselben Schweißnaht auch der den Hitzeschutz ausbildende Rohrabschnitt mit angeschweißt werden kann. Zudem ist die Dämpfungseinlage nicht mehr an den seitlichen Anschlußstücken befestigt, sie ist vielmehr ohne spezielle Befestigung in dem Ringraum angeordnet und aufgenommen, der zwischen den zylindrischen Endbereichen der Anschlußstücke und der Oberseite der Faltenbalg-Windungen ausgebildet ist. Dabei stützen diese zylindrischen Endbereiche die Dämpfungseinlage nach außen hin ab, während gegen ihre radial innenliegende Seite die Windungen des Faltenbalges anliegen. Dadurch, daß die Windungen des Faltenbalges nur anliegen und nicht, wie bei der gattungsgemäßen Dichtungsanordnung, in die Dämpfungseinlage hineingedrückt und eingebettet sind, ist auch eine Verschiebbarkeit der Windungen des Faltenbalges an der Innenseite der Dämpfungseinlage in Längsrichtung der Verbindungsanordnung gegeben, wodurch auftretende Relativbewegungen in Axialrichtung durch den Faltenbalg so gut wie unbehindert ausgeglichen werden können. Durch die außen angebrachte Verbindungsfeder zum Verbinden der beiden Anschlußstücke, deren beide Endbereiche jeweils an einem der beiden Anschlußstücke befestigt sind, werden alle in axialer Richtung aufzunehmende Kräfte über diese Feder übertragen und gleichzeitig eine Vorspannung in eine bestimmte Ausgangs-Mittelstellung hin bewirkt Die äußere Umhüllung des Faltenbalges durch die Dämpfungseinlage in Verbindung mit deren seitlicher Aufnahme in den erweiterten Endabschnitten der Anschlußstücke gibt auch stets einen wirkungsvollen Schutz des Faltenbalges gegen unerwünschte äußere Einflüsse.

Die erfindungsgemäße Verbindungsanordnung bietet insgesamt einen überraschend einfachen Aufbau mit nur wenigen Befestigungsstellen, der gleichzeitig einen besonders unkomplizierten und raschen Zusammenbau der Verbindungsanordnung gestattet. Bei der erfindungsgemäßen Anordnung ist zudem in Anpassung an unterschiedliche Erfordernisse des Einsatzfalls, etwa zum Einbau bei unterschiedlichen Kraftfahrzeugen, unschwer eine Änderung der Gesamtdimensionen wie auch der Betriebscharakteristiken der Gesamtanordnung möglich. Zudem lassen sich insgesamt größere Toleranzen bei den Relativbewegungen der miteinander verbundenen Bauteile ausgleichen, ohne daß durch die beschränkte Dehnbarkeit eines äußeren und/oder inneren Metallschlauchs Axialspannungen oder gar Beschädigungen der Befestigungen entstehen. Dabei läßt sich gegenüber der gattungsgemäßen Lösung gleichzeitig auch eine kleinere Ausbildung des Faltenbalges erreichen, da dieser einen vergleichweise kleinen mittleren Durchmesser aufweist Die radial außenliegenden Endbereiche der Falten des Balges liegen unter einer radialen Vorspannung, die so groß gewählt ist, daß sie gerade noch ein unbehindertes Verschieben der Balgwindungen an der Innenseite der Dämpfungseinlage gestattet, dennoch aber eine wirksame Dämpfungswirkung der Dämpfungseinlage auf dem Faltenbalg gewährleistet ist.

Bevorzugt wird die Feder so angeordnet, daß sie vom Außenumfang der Dämpfungseinlage (in radialer Richtung gesehen) einen Abstand aufweist, der, erneut bevorzugt, ungefähr so groß wie die Wanddicke der Endbereiche der durch die Feder verbundenen Endabschnitte ist. Hierdurch wird eine vorteilhafte, völlige Trennung der Funktionen der Verbindungsfeder einerseits und der Dämpfungseinlage andererseits ohne irgendwelche gegenseitige Beeinflussung erreicht.

Jedoch kann auch die Feder auf der Außenseite der Dämpfungseinlage so angeordnet sein, daß sie auf dem Außenmantel der Dämpfungseinlage sitzt, wodurch sie gleichzeitig auch eine Halterung der Dämpfungseinlage radial nach außen hin darstellt.

Die Ausbildung des Faltenbalges selbst kann in jeder geeigneten Weise erfolgen. Besonders bevorzugt wird er jedoch mit schraubengangförmigen oder ringgewellten Windungen versehen.

In bevorzugter Weiterbildung der Erfindung weisen die erweiterten Endabschnitte der Anschlußstücke jeweils einen ersten, radial nach außen gerichteten Ringabschnitt auf, an den sich (ausgehend von seinem außenliegenden Ende) ein schräg nach außen zum balgseitigen Ende des betreffenden Anschlußstücke konisch sich erweiternder Zwischenabschnitt anschließt, der seinerseits in den jeweiligen zylindrischen Endbereich des betreffenden Anschlußstückes übergeht. Hierdurch wird eine unkompliziert aufgebaute, leicht herstellbare Form der erweiterten Endabschnitte geschaffen, die in Verbindung mit dem innenliegenden Balg und der dazwischen angeordneten Dämpfungseinlage hervorragende Gebrauchseigenschaften ergibt.

Die Feder zur Verbindung der beiden Anschlußstücke wird besonders bevorzugt in Form einer Schraubenfeder ausgebildet Eine solche Schraubenfeder kann gleichzeitig Axial- und Torsionskräfte nennenswerter Größenordnung wirksam aufnehmen, ist preisgünstig herstellbar und kann besonders rasch und einfach montiert werden.

Als Material läßt sich für die Dämpfungseinlage jeder für eine gewünschte Dämpfung und die sonstigen Randbedingungen geeignete Werkstoff einsetzen. Besonders bevorzugt besteht die Dämpfungseinlage jedoch aus einem metallischen Geflecht, Gewebe, Gewirke oder Gestrick oder aus verpreßtem Metalldraht, wobei besonders bei der Verwendung eines Metallgestrickes eine gute Wärmeabstrahlung erzielt werden kann. Für bestimmte Einsatzfälle kann es sich auch als besonders zweckmäßig erweisen, die Dämpfungseinlage mit einer Beimengung von Glas- oder Mineralfasern und/oder mit einer wärmeisolierenden Schicht zu versehen bzw. sie selbst aus einem dämpfenden und gleichzeitig wärmeisolierenden Material auszubilden, wodurch - bei der Verwendung in mit Katalysatoren versehenen Abgasanlagen - die Anspringzeit des Katalysators verkürzt werden kann. Dabei wird die Dämpfungseinlage besonders bevorzugt auf ihrer radial innenliegenden Umfangsfläche mit einer solchen wärmeisolierenden Schicht versehen.

Der Faltenbalg kann an den beiden seitlichen Anschlußstücken in jeder geeigneten Form befestigt werden, die sichersteilt, daß eine ringsum laufende, vollständig gasdichte Befestigung vorliegt. Besonders bevorzugt wird der Faltenbalg an beiden Anschlußstücken angeschweißt, wodurch eine völlige Gasdichtheit erzielbar ist

In weiterer vorteilhafter Fortbildung der Erfindung kann die Dämpfungseinlage auf ihrer radial äußeren Umfangsfläche noch mit einem Schutzüberzug versehen werden, der verhindert, daß irgendwelche äußeren Einflüsse auf die Dämpfungseinlage einwirken und diese beschädigen könnten. Zudem läßt sich damit gegebenenfalls auch die Dämpfungswirkung beeinflussen.

Eine weitere bevorzugte Ausbildung der Erfindung besteht auch darin, daß die Dämpfungseinlage auf ihrer radial inneren Umfangsfläche mit einer hitzebeständigen Gleitschicht überzogen ist, wodurch ein Verschieben der an der inneren Umfangsfläche der Dämpfungseinlage anliegenden Windungen des Faltenbalges relativ zur Dämpfungseinlage erleichtert und begünstigt wird.

Auch die Befestigung der Feder mit ihren beiden axialen Endbereichen an dem jeweiligen Anschlußstück kann in jeder für die Übertragung der zu erwartenden Kräfte ausreichenden Weise erfolgen. Besonders bevorzugt wird die Befestigung jedoch durch Punktschweißung vorgenommen, wobei längs jedes Endbereichs mehrere Punktschweißstellen vorgesehen sind.

Die Erfindung wird nachfolgend anhand der Zeichnung im Prinzip beispielshalber noch näher erläutert. Es zeigen:
Fig. 1 einen Längsschnitt durch eine Prinzipdarstellung einer erfindungsgemäßen Verbindungsanordnung im nicht-eingebauten Zustand und
Fig. 2 einen Längsschnitt wie Fig. 1, jedoch durch eine alternative Ausführungsform.

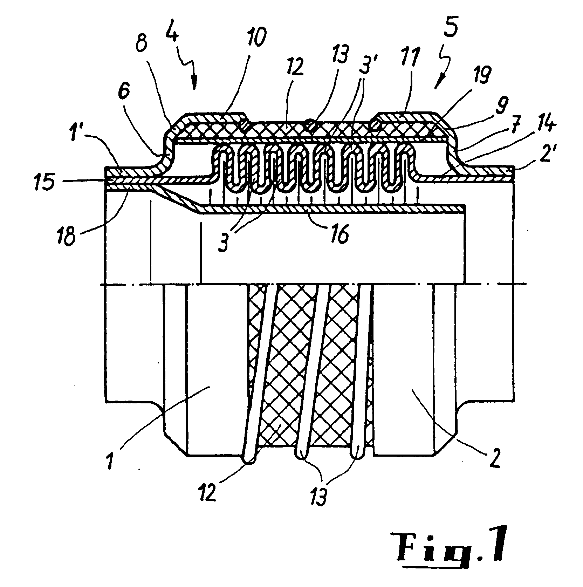

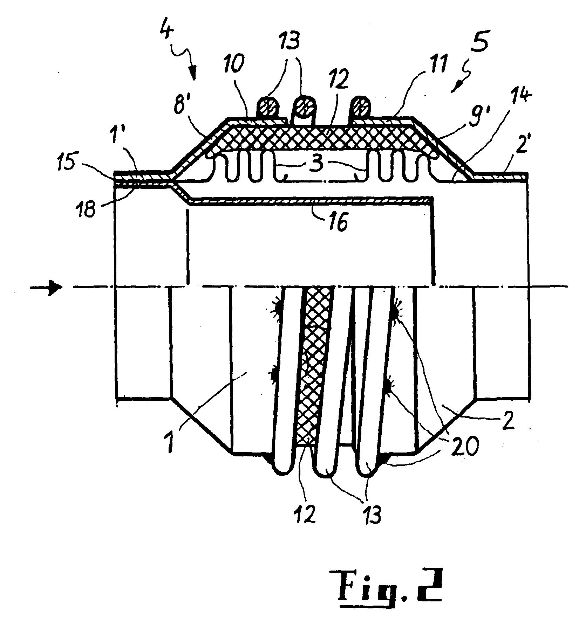

Die in den Fig. 1 und 2 dargestellten Verbindungsanordnungen dienen der flexiblen Verbindung zweier Rohrteile und weisen jeweils zwei seitliche Anschlußstücke 1, 2 auf, an deren jedem jeweils ein Ende eines zwischen ihnen angeordneten und koaxial zu ihnen verlaufenden Faltenbalges 3 gasdicht befestigt ist (in beiden Fig. sind gleiche oder entsprechende Teile mit gleichen Bezugszeichen versehen).

Die Anschlußstücke 1, 2 weisen bei den gezeigten Ausführungsformen an ihren dem Faltenbalg 3 jeweils abgewandten Endbereichen jeweils einen zylindrischen Rohrabschnitt 1' bzw. 2' auf, an dessen dem Balg 3 zugewandtem Ende sich radial erweitemde Endabschnitte 4, 5 angebracht sind. Jeder dieser Endabschnitte 4, 5 besteht beim Ausführungsbeispiel der Fig. 1 jeweils aus einem ersten, radial nach außen verlaufenden Ringabschnitt 6 bzw. 7, der an seinem radial außenliegenden Ende in einen schräg aufsteigenden, zum balgseitigen Ende des betreffenden Anschlußstückes 1 bzw. 2 hin konisch sich erweiternden Zwischenabschnitt 8 bzw. 9 übergeht, an den seinerseits sich an seinem radial äußeren Ende ein zylindrischer Endbereich 10 bzw. 11 anschließt. Bei der Ausführungsform nach Fig. 2 weisen die Endabschnitte 4, 5 keinen radialen Ringabschnitt mehr auf, sondern nur einen ersten, mit zunehmender Entfernung vom jeweiligen zylindrischen Rohrabschnitt 1' bzw. 2' sich radial konisch erweiternden Zwischenabschnitt 8' und 9', an den sich dann wieder ein zylindrischer Endbereich 10 bzw. 11 anschließt. Die Länge der zylindrischen Endbereiche 10, 11 ist bei beiden dargestellten Ausführungsformen gleich groß und sie weisen auch eine gleiche Wanddicke d und einen gleichen Durchmesser auf, wobei ihre freien Enden, wie aus den Fig. 1 und 2 ersichtlich, in einem Abstand voneinander entfernt liegen.

Der Faltenbalg 3 wird radial außen von einer Dämpfungseinlage 12 umschlossen, gegen deren radial innere Umfangsfläche die äußeren Endbereiche der Windungen 3' des Faltenbalges 3 unter Vorspannung anliegen. Auf der Außenseite der Dämpfungseinlage 12 ist eine Schraubenfeder 13 angeordnet, die an ihrem einen Endabschnitt am einen Endbereich 10 des einen Anschlußstücks 1 und mit ihrem anderen Endabschnitt am zylindrischen Endbereich 11 des anderen Anschlußstücks 2 befestigt ist. Dabei erfolgt die Befestigung in der Art, daß die Endbereiche der Feder mittels Punktschweißung über mehrere Schweißpunkte 20 am betreffenden zylindrischen Endbereich 10 bzw. 11 angeschweißt sind. Beim Ausführungsbeispiel nach Fig. 1 sitzt die Feder 13 so am Außenumfang der Dämpfungseinlage 12 auf, daß ihre Windungen sogar etwas in die Oberfläche der Dämpfungseinlage eingebettet sind. Beim Ausführungsbeispiel der Fig. 2 ist hingegen die Feder 13 in einem radialen Abstand x vom Außenumfang der Dämpfungseinlage 12 entfernt, wobei dieser Abstand gleich der Dicke d der beiden (gleich dicken) Endbereiche 10 bzw. 11 ist. Hierbei sitzen die Enden der Feder 13 außen auf den beiden Endbereichen 10 und 11 auf und sind dort mittels Schweißpunkten 20 befestigt.

Die Dämpfungseinlage 12 weist im wesentlichen die Form eines zylindrischen Ringes auf, der an seinen axialen Endflächen mit einer der Schräge des zugeordneten Zwischenabschnitts 8, 9 bzw. 8', 9' des entsprechenden Endabschnitts 4 bzw. 5 angepaßten Abschrägung versehen ist.

In der in den Figuren gezeigten Ausgangslage (Einbauzustand), in der die Feder 13 sich im entspannten Zustand befindet, füllt die Dämpfungseinlage 12 jeweils den gesamten Ringbereich aus, der zwischen der Oberseite der Windungen 3' des Faltenbalges 3 und der Unterseite der zylindrischen Endbereiche 10, 11 sowie der konisch sich erweiternden Zwischenabschnitte 8, 9 bzw. 8', 9' der Endabschnitte 4, 5 liegt Dabei ist die Dichtungseinlage 12 an keiner Stelle mit einer speziellen Befestigung an den sich erweiternden Endbereichen 4, 5 der Anschlußstücke 1, 2 versehen. Wenn sich im eingebauten Zustand z.B. die Anschlußstücke 1 und 2 axial auseinanderbewegen, dann kann die Dämpfeinlage 12, die unter einer gewissen Vorspannung zwischen den Windungen 3' und den sie axial nach außen halternden zylindrischen Endbereichen 10, 11 festgehalten ist. aufgrund der auftretenden Kräfte ohne weiteres relativ zu den zylindrischen Endbereichen 10 und 11 gleiten, wobei gleichzeitig die Windungen 3' des Faltenbalges 3 auf der Innenseite der Dämpfungseinlage 12 ebenfalls eine Gleitbewegung ausführen können.

Zur Erleichterung dieser Gleitbewegung ist beim Ausführungsbeispiel nach Fig. 1 auf der radialen Innenseite der Dämpfeinlage 12 eine temperaturbeständige Gleitschicht 19 etwa in Form einer Gleitfolie (z.B. Aluminiumfolie), aufgebracht, die trotz der Andrückkräfte, mit denen die Windungen 3' des Faltenbalges 3 gegen die Dämpfeinlage 12 drücken, ein Gleiten der Windungen 3' relativ zur Dämpfeinlage 12 ermöglicht. Selbstverständlich könnte eine solche Gleitschicht auch bei der in Fig. 2 dargestellten Ausführungsform gleichermaßen vorgesehen werden.

Unterhalb des Faltenbalges 3 sowie konzentrisch zu diesem, jedoch in einem Abstand zu ihm radial nach innen versetzt, ist ein Hitzeschutz in Form eines Rohrabschnitts 16 (Degenrohr) vorgesehen, der an seinem in Strömungsrichtung gesehen vorne liegenden Endbereich am dortigen Anschlußstück 1 innerhalb dessen zylindrischen Einlaßbereiches 1' befestigt ist.

Der Faltenbalg 3 weist an seinen beiden axialen Enden jeweils einen zylindrisch geformten Endabschnitt 14, 15 auf, der bis an das dem Faltenbalg abgewandte Ende des jeweiligen Anschlußstückes 1 bzw. 2 reicht, wie dies die Fig. 1 deutlich zeigt (dasselbe gilt grundsätzlich auch für Fig. 2, obgleich dort in der zeichnerischen Darstellung der Faltenbalg nur schematisch eingezeichnet ist). Am Anschlußstück 1 ist der zylindrische Endbereich 15 des Faltenbalges 3 zusammen mit dem dort anliegenden Endabschnitt 18 des Rohrabschnitts 16 gemeinsam in geeigneter Weise, z.B. durch Schweißung, befestigt. Der zylindrische Endabschnitt 14 am anderen Ende des Faltenbalges 3 ist mit dem dortigen Anschlußstück 2, ebenfalls bevorzugt durch Schweißung, verbunden.

Die Dämpfungseinlage 12 besteht bei den dargestellten Ausführungsbeispielen aus einem metallischen Gewirke, in das (aus der Zeichnung nicht ersichtlich) Glasfasem oder Mineralfasern eingelassen sind. Es besteht auch die Möglichkeit, auf der Außenseite der Dämpfungseinlage 12 noch eine (in den Figuren ebenfalls nicht dargestellte) Schicht zum Schutz gegen unerwünschte äußere Einflüsse anzubringen.

Der Rohrabschnitt 16 erstreckt sich als Hitzeschutz, ausgehend vom vorderen Anschlußstück 1, axial bis zu einer Stelle, die etwa dort liegt, wo am anderen Anschlußstück 2 der die radiale Erweiterung eröffnende Ringabschnitt 7 radial nach außen abspreizt. Die radiale Lage des Rohrabschnitts 16 relativ zur sonstigen Anordnung wird so gewählt, daß auch beim Auftreten der größten zu erwartenden Abwinkelung der beiden Anschlußstücke 1 und 2 zueinander, für die die Anordnung ausgelegt ist, das Ende des Rohrabschnitts 16 noch immer nicht gegen den zylindrischen Endabschnitt 14 des Faltenbalges 3 anliegt Die Befestigung des Hitzeschutzes am vorderen, d.h. in Strömungsrichtung (Pfeil in Fig. 1 und 2) der durch die Anordnung strömenden Heißgase stromaufwärts angeordneten Anschlußstück 1 gewährleistet, daß der am freien Ende des Rohrabschnitts 16 auftretende Spalt zum dortigen Endbereich des Faltenbalges 3 weiter stromabwärts liegt, so daß durch ihn möglicherweise doch hindurchtretende Gase, die dann zum Faltenbalg 3 gelangen können, etwas kühler sind als bei einer Befestigung des Hitzeschutzes 16 am hinteren Anschlußstück 2.

## Patentansprüche

1. Flexible Verbindungsanordnung für zwei Rohrteile, insbesondere bei Abgasanlagen von Kraftfahrzeugen, mit einem metallischen, axial beidseitig mit Anschlußstücken (1, 2) in Form von im wesentlichen zylindrischen Hülsen oder Stutzen gasdicht verbundenen Faltenbalg (3), wobei die Anschlußstücke (1, 2) an ihren dem Faltenbalg (3) zugewandten Seiten radial erweiterte Endabschnitte (4, 5) mit im wesentlichen zylindrischen Endbereichen (10, 11) aufweisen, ferner mit einer koaxial zum Faltenbalg (3) liegenden, sich über dessen Länge erstreckenden und mit ihm in Wirkverbindung stehenden Dämpfungseinlage (12) und einem radial nach innen wirksamen Hitzeschutz (16) für den Faltenbalg (3), **dadurch gekennzeichnet,** daß die Dämpfungseinlage (12) den Faltenbalg (3) radial außen umschließt, wobei die Windungen (3') des Faltenbalges (3) gegen die Dämpfungseinlage (2) anliegen, die axialen Endbereiche der Dämpfungseinlage (12) in den erweiterten Endabschnitten (4, 5) der Anschlußstücke (1, 2) ohne Befestigung an diesen gehaltert sind und von deren zylindrischen Endbereichen (10, 11) radial nach außen abgestützt werden, daß ferner die Anschlußstücke (1, 2) über eine die Dämpfungseinlage (12) radial außen umgebende Feder (13) miteinander verbunden sind, und daß der Hitzeschutz von einem koaxial zum Faltenbalg (3) radial mit Abstand zu diesem innerhalb desselben verlaufenden Rohrabschnitt (16) gebildet ist, der an dem in Strömungsrichtung vorne liegenden Anschlußstück (1) befestigt ist.

2. Flexible Verbindungsanordnung nach Anspruch 1, dadurch gekennzeichnet, daß die Feder (13) mit einem radialen Abstand (x) vom Außenumfang der Dämpfungseinlage (12) entfernt angeordnet ist.

3. Flexible Verbindungsanordnung nach Anspruch 1, dadurch gekennzeichnet, daß die Feder (13) auf dem Außenumfang der Dämpfungseinlage (12) sitzt.

4. Flexible Verbindungsanordnung nach einem der Ansprüche 1 bis 3, dadurch gekennzeichnet, daß der Faltenbalg (3) mit schraubengangförmigen oder ringgewellten Windungen (3') versehen ist.

5. Flexible Verbindungsanordnung nach einem der Ansprüche 1 bis 4, dadurch gekennzeichnet, daß die erweiterten Endabschnitte (10, 11) der Anschlußstücke (1, 2) jeweils einen ersten, radial nach außen gerichteten Ringabschnitt (6; 7) aufweisen, an dessen außenliegendem Ende ein schräg nach außen zum balgseitigen Ende des Anschlußstückes (1; 2) hin konisch sich erweiternder Zwischenabschnitt (8; 9) anschließt, der seinerseits in den jeweiligen zylindrischen Endbereich (10; 11) des betreffenden Anschlußstückes (1; 2) übergeht.

6. Flexible Verbindungsanordnung nach einem der Ansprüche 1 bis 5, dadurch gekennzeichnet, daß die die Anschlußstücke (1; 2) verbindende Feder (13) als Schraubenfeder ausgebildet ist.

7. Flexible Verbindungsanordnung nach einem der Ansprüche 1 bis 6, dadurch gekennzeichnet, daß die Dämpfungseinlage (12) eine wärmeisolierende Schicht (19) aufweist oder aus einem dämpfenden und gleichzeitig wärmeisolierenden Material besteht.

8. Flexible Verbindungsanordnung nach Anspruch 7, dadurch gekennzeichnet, daß die Dämpfungseinlage (12) auf ihrer radial innenliegenden Umfangsfläche mit der wärmeisolierenden Schicht (19) überzogen ist.

9. Flexible Verbindungsanordnung nach einem der Ansprüche 1 bis 8, dadurch gekennzeichnet, daß der Faltenbalg (3) an beiden Anschlußstücken (1; 2) angeschweißt ist.

10. Flexible Verbindungsanordnung nach einem der Ansprüche 1 bis 9, dadurch gekennzeichnet, daß die Dämpfungseinlage (12) auf ihrer radial äußeren Umfangsfläche mit einem Schutzüberzug versehen ist.

11. Flexible Verbindungsanordnung nach einem der Ansprüche 1 bis 10, dadurch gekennzeichnet, daß die Dämpfungseinlage (12) aus einem Geflecht, Gewebe, Gewirke oder Gestrick aus Metall besteht.

12. Flexible Verbindungsanordnung nach einem der Ansprüche 1 bis 10, dadurch gekennzeichnet, daß die Dämpfungseinlage (12) aus verpreßtem Metalldraht besteht.

13. Flexible Verbindungsanordnung nach einem der Ansprüche 1 bis 12, dadurch gekennzeichnet, daß die Dämpfungseinlage (12) eine Beimengung von Glas- oder Mineralfasern aufweist.

14. Flexible Verbindungsanordnung nach einem der Ansprüche 1 bis 13, dadurch gekennzeichnet, daß die Dämpfungseinlage (12) auf ihrer radial inneren Umfangsfläche mit einer hitzebeständigen Gleitschicht (19) überzogen ist.

15. Flexible Verbindungsanordnung nach einem der Ansprüche 2 bis 14, dadurch gekennzeichnet, daß die Spiralfeder (13) am Endabschnitt (10; 11) jedes Endabschnitts (4; 5) jeweils mittels Punktschweißung (20) befestigt ist.

16. Flexible Verbindungsanordnung nach Anspruch 2 oder Anspruch 2 und einem der Ansprüche 4 bis 15, dadurch gekennzeichnet, daß der radiale Abstand (x) der Feder (3) vom Außenumfang der Dämpfungseinlage (12) so groß wie die Wanddicke (d) der Endbereiche (10; 11) der Endabschnitte (4; 5) ist.

## Claims

1. Flexible connection arrangement for two pieces of pipe, in particular in exhaust gas systems of motor vehicles, having a metal bellows (3) connected axially on both sides in a gas-tight manner to connectors (1, 2) in the form of substantially cylindrical sleeves or pipe sockets, the connectors (1, 2), at their sides facing the bellows (3), having radially enlarged end portions (4, 5) with substantially cylindrical end regions (10, 11), the arrangement further having a damping insert (12) lying coaxially with respect to the bellows (3), extending over the length thereof and in operative connection therewith, and a radially inwardly effective heat protector (16) for the bellows (3), characterized in that the damping insert (12) radially surrounds the bellows (3) externally, wherein the folds (3') of the bellows (3) lie against the damping insert (2) , the axial end regions of the damping insert (12) are held in the enlarged end portions (4, 5) of the connectors (1, 2), without being fixed thereto, and are supported in a radially outward direction by the cylindrical end regions (10, 11) thereof, in that further the connectors (1, 2) are connected to one another by means of a spring (13) radially surrounding the damping insert (12) externally, and in that the heat protector is formed by a portion of pipe (16) running coaxially with respect to the bellows (3) radially spaced apart therefrom and inside the same, which pipe portion is secured to the connector (1) lying upstream in the direction of flow..

2. Flexible connection arrangement according to claim 1, characterized in that the spring (13) is arranged with a radial spacing (x) apart from the outer circumference of the damping insert (12).

3. Flexible connection arrangement according to claim 1, characterized in that the spring (13) rests on the outer circumference of the damping insert (12).

4. Flexible connection arrangement according to one of claims 1 to 3, characterized in that the bellows (3) is provided with helical or annularly corrugated folds (3').

5. Flexible connection arrangement according to one of claims 1 to 4, characterized in that each of the enlarged end portions (10, 11) of the connectors (1, 2) has a first radially outwardly directed annular portion (6; 7) adjoining the outermost end of which is an transition piece (8; 9) which enlarges conically obliquely outwards to the bellows-side end of the connector (1; 2), which transition piece in turn continues to become the respective cylindrical end region (10; 11) of the connector (1; 2) in question.

6. Flexible connection arrangement according to one of claims 1 to 5, characterized in that the spring (13) connecting the two connectors (1; 2) is in the form of a helical spring.

7. Flexible connection arrangement according to one of claims 1 to 6, characterized in that the damping insert (12) has a heat-insulating layer (19) or consists of a material that has both damping and heat-insulating properties.

8. Flexible connection arrangement according to claim 7, characterized in that the damping insert (12) is provided on its radially inner circumferential surface with the heat-insulating layer (19).

9. Flexible connection arrangement according to one of claims 1 to 8, characterized in that the bellows (3) is welded to both connectors (1; 2).

10. Flexible connection arrangement according to one of claims 1 to 9, characterized in that the damping insert (12) is provided on its radially outer circumferential surface with a protective covering.

11. Flexible connection arrangement according to one of claims 1 to 10, characterized in that the damping insert (12) consists of a metal braiding, woven metal fabric or knitted metal fabrics.

12. Flexible connection arrangement according to one of claims 1 to 10, characterized in that the damping insert (12) consists of pressed metal wire.

13. Flexible connection arrangement according to one of claims 1 to 12, characterized in that the damping insert (12) has glass fibres or mineral fibres incorporated in it.

14. Flexible connection arrangement according to one of claims 1 to 13, characterized in that the damping insert (12) is covered on its radially inner circumferential surface with a heat-resistant slidingcontact layer (19).

15. Flexible connection arrangement according to one of claims 2 to 14, characterized in that the helical spring (13) is fixed to the end portion (10; 11) of each end portion (4; 5) in each case by means of spot welding (20).

16. Flexible connection arrangement according to claim 2, or claim 2 and one of claims 4 to 15, characterized in that the radial spacing (x) of the spring (3) from the outer circumference of the damping insert (12) is the same as the wall thickness (d) of the end regions (10; 11) of the end portions (4; 5).

## Revendications

1. Dispositif de raccordement flexible pour deux éléments tubulaires, notamment pour systèmes de gaz d'échappement de véhicules automobiles, comportant un soufflet (3) métallique, relié de manière étanche aux gaz des deux côtés axialement avec des pièces de raccord (1, 2), sous la forme de douilles ou de tubulures sensiblement cylindriques, les pièces de raccord (1, 2) présentant, sur leurs côtés tournés vers le soufflet (3), des portions d'extrémité (4, 5) élargies radialement avec des zones d'extrémité (10, 11) sensiblement cylindriques, comportant en outre une garniture d'amortissement (12), coaxiale au soufflet (3), s'étendant sur toute sa longueur et en liaison active avec celui-ci ainsi qu'une protection contre la chaleur (16), opérant radialement vers l'intérieur pour le soufflet (3), caractérisé en ce que la garniture d'amortissement (12) entoure radialement à l'extérieur le soufflet (3), les lacets (3') du soufflet (3) s'appliquant contre la garniture d'amortissement (2), les zones d'extrémité axiales de la garniture d'amortissement (12) étant maintenues dans les portions d'extrémité (4, 5) élargies des pièces de raccord (1, 2) sans fixation contre celles-ci et étant soutenues radialement vers l'extérieur par leurs zones d'extrémité (10, 11) cylindriques, en ce qu'en outre les pièces de raccord (1, 2) sont reliées entre elles par un ressort (13), entourant radialement à l'extérieur la garniture d'amortissement (12), et en ce que la protection contre la chaleur est formée par une portion de tube (16) s'étendant coaxialement au soufflet (3), radialement à distance de celui-ci, à l'intérieur de celui-ci, portion de tube qui est fixée sur la pièce de raccord (1) située à l'avant dans le sens d'écoulement.

2. Dispositif de raccordement flexible selon la revendication 1, caractérisé en ce que le ressort (13) est placé éloigné, à une distance radiale (x) du pourtour extérieur de la garniture d'amortissement (12).

3. Dispositif de raccordement flexible selon la revendication 1, caractérisé en ce que le ressort (13) est placé sur le pourtour extérieur de la garniture d'amortissement (12).

4. Dispositif de raccordement flexible selon l'une des revendications 1 à 3, caractérisé en ce que le soufflet (3) est pourvu de lacets (3') en forme de filets de vis ou d'ondulations annulaires (3').

5. Dispositif de raccordement flexible selon l'une des revendications 1 à 4, caractérisé en ce que les portions d'extrémité (10, 11) élargies des pièces de raccord (1, 2) présentent chacune une première portion d'anneau (6 ; 7), dirigée radialement vers l'extérieur, à l'extrémité extérieure de laquelle fait suite une portion intermédiaire (8 ; 9) s'élargissant coniquenent et obliquement vers l'extérieur, vers l'extrémité côté soufflet de la pièce de raccord 1 ; 2), portion intermédiaire qui de son côté se prolonge par la zone d'extrémité (10 ; 11) cylindrique respective de la pièce de raccord (1 ; 2) concernée.

6. Dispositif de raccordement flexible selon l'une des revendications 1 à 5, caractérisé en ce que le ressort (13), reliant les pièces de raccord (1 ; 2), est conformé en ressort hélicoïdal.

7. Dispositif de raccordement flexible selon l'une des revendications 1 à 6, caractérisé en ce que la garniture d'amortissement (12) présente une couche (19) isolante thermiquement ou est faite d'un matériau amortissant et en même temps thermiquement isolant.

8. Dispositif de raccordement flexible selon la revendication 7, caractérisé en ce que la garniture d'amortissement (12) est recouverte, sur sa surface périphérique située radialement à l'intérieur, avec la couche (19) thermiquement isolante.

9. Dispositif de raccordement flexible selon l'une des revendications 1 à 8, caractérisé en ce que le soufflet (3) est soudé aux deux pièces de raccord (1 ; 2).

10. Dispositif de raccordement flexible selon l'une des revendications 1 à 9, caractérisé en ce que la garniture d'amortissement (12) est pourvue sur sa surface périphérique radialement extérieure d'un revêtement de protection.

11. Dispositif de raccordement flexible selon l'une des revendications 1 à 10, caractérisé en ce que la garniture d'amortissement (12) est constituée d'un treillis, tissu, d'un tissu à mailles ou tricot en métal.

12. Dispositif de raccordement flexible selon l'une des revendications 1 à 10, caractérisé en ce que la garniture d'amortissement (12) est faite d'un fil métallique pressé.

13. Dispositif de raccordement flexible selon l'une des revendications 1 à 12, caractérisé en ce que la garniture d'amortissement (12) présente un ajout de fibres de verre ou de fibres minérales.

14. Dispositif de raccordement flexible selon l'une des revendications 1 à 13, caractérisé en ce que la garniture d'amortissement (12) est recouverte sur sa surface périphérique radialement intérieure d'une couche de glissement (19) résistant à la chaleur.

15. Dispositif de raccordement flexible selon l'une des revendications 2 à 14, caractérisé en ce que le ressort spiral (13) est fixé à la portion d'extrémité (10 ; 11) de chaque portion d'extrémité (4 ; 5), par soudage par points (20).

16. Dispositif de raccordement flexible selon la revendication 2 ou la revendication 2 et l'une des revendications 4 à 15, caractérisé en ce que la distance radiale (x) du ressort (3) par rapport au pourtour extérieur de la garniture d'amortissement (12) est égale à l'épaisseur de paroi (d) des zones d'extrémité (10 ; 11) des portions d'extrémité (4 ; 5).
